# EUROPEAN PATENT APPLICATION

(11) **EP 3 425 522 A1**
(43) Date of publication of application: **09.01.2019**
(21) Application number: 17382440.0
(22) Date of filing: 06.07.2017
(51) Int. Cl.: G06F 17/30

(54) **IDENTIFYING BACKGROUND AUDIO IN BROADCAST SIGNALS USING MULTIPLE SOURCES**

(71) Applicant: BMAT LICENSING, S.L.U., 08024 Barcelona (ES)
(72) Inventor: Molina Martínez, Emilio, 08024 BARCELONA (ES); Ciurana Aguilar, Alex, 08024 BARCELONA (ES); Cano Vila, Pedro, 08024 BARCELONA (ES)
(74) Representative: ZBM Patents - Zea, Barlocci & Markvardsen

(57) **Abstract**

Methods and devices for identifying background audio signals in broadcast audio signals using multiple sources are disclosed. First audio files with the isolated background audio signals are received from a first source, such as a mixer through, e.g., a communication channel and second audio files with the broadcast audio signals are received from a second source through, e.g., a broadcast transmission channel. Then, presence of the background audio signals is identified in the broadcast audio signals.

## Description

The present disclosure relates to methods and devices for use in audio identification and more specifically in Identifying background audio, such as music, in broadcast signals

### BACKGROUND

In the context of broadcast monitoring (e.g. TV and radios), the use of background audio, such as music, with foreground speech (or other sounds) is relatively frequent. When the energy (i.e. the audibility) of this background music is very low, the identification of title and artist using current state-of-the-art music identification technologies (e.g. audio fingerprinting) typically does not produce good results without an excessive computational cost.

One trivial solution to this problem is to manually indicate in a cue-sheet which song has been played at each time region during the production stage. However, this process either is not done in all cases, or is burdensome or it might not be done in a rigorous way.

It would be desirable to provide a method and a system to reliably identify audio, e.g. music, in the background of a broadcasted signal with a limited computational cost, even if the background audio has a very low relative energy with respect to the foreground sounds to be barely perceptible by the human ear.

### SUMMARY

According to the proposed solution, two audio sources are combined to improve the identification: the broadcasted signal (TV, radio or internet stream) received by the user (which might contain music in the background), and the isolated music signal taken from the mixer in the TV/radio studio (which does not contain other overlapping sounds).

In a first aspect, a method of identifying a background audio signal in a broadcast audio signal using multiple sources is provided. The method may comprise receiving from a first source a first audio file with the isolated background audio signal; receiving from a second source a second audio file with the broadcast audio signal; identifying the background audio signal in the broadcast audio signal.

The first source may be a first output of a mixer at a broadcasting studio, the first output providing the isolated background audio signal, i.e. the background audio signal before mixing with other audio sources. Alternatively, the first source may be the audio source of the background audio before it enters the mixer. The first audio may be received using a telecommunications channel, e.g. the internet. The second source may be a second output of the mixer at the broadcasting studio, the second output providing the mixed audio signal.

As the audio, e.g. music, from the mixer in the broadcasting studio might not be present in the broadcasted signal, e.g. when the volume of the music channel is at a minimum, or when the program is not live, a second stage of validation is used, where both audio signals are compared in order to verify that the broadcasted signal actually contains the signal coming from the mixer in the broadcasting studio (of a TV or radio station). Once this verification is done, the isolated music signal may be used for identification, typically leading to clear identification results, since it is completely isolated. In case the verification step produces a negative result, then the identification is run over the broadcasted signal. The process may be used in live broadcastings where the individual signals (e.g. speech and music) are mixed before broadcasting.

In some examples, comparing the two signals may comprise validating presence of the first audio file in the second audio file using fingerprinting. The advantage of applying audio fingerprinting only between two audios, instead of one audio against a whole collection (which would be the typical scenario using a traditional fingerprinting solution), is that the traditional fingerprinting solution can be computationally more expensive in order to guarantee a correct validation.

One way to create the fingerprint of these two audios is through the following steps: First, for each audio file, a time-frequency representation (e.g. spectrogram) of the audio may be extracted. Then, a set of local maxima above a certain energy threshold may be selected from these spectrograms. These local maxima may be used as a fingerprint of the audio, and may be used to find the optimal alignment between both audios; i.e. the alignment maximizing the number of common local maxima between both audios. After the alignment is done, the final number of common local maxima may be taken as a "similarity" measure, and it may be used to define if both audios really correspond to the same music track. If the number of common local maxima is above a certain "similarity" threshold, the validation process may be considered positive; otherwise, the result may be considered negative. One skilled in the art may appreciate that the validation process may be performed using any other audio similarity method able to validate presence of the first audio in the second audio.

Once the validation result is known, a music identification system (e.g. based on audio fingerprinting) may be executed over the corresponding audio. If the validation produces a positive result, the music identification system may be executed over the isolated audio from the mixer, i.e. the isolated music. In most cases, a clear identification may be produced because the music is totally isolated. Otherwise, if the validation produces a negative result, the music identification system may be executed over the broadcasted signal, where the music might be in the background.

In another aspect, a device to identify a background audio signal in a broadcast audio signal using multiple sources is provided. The device may comprise a first receiver to receive a first audio file from a first source, e.g. a broadcasting mixer, with the isolated background audio signal; a second receiver to receive a second audio file from a second source, e.g. the broadcast transmission channel, with the broadcast audio signal; and comparing logic to compare the first with the second audio file to identify the background audio signal in the broadcast audio signal.

In some examples, the first receiver may be coupled to a telecommunication network and the first audio file may be downloaded to the first receiver from a recording device attached to a broadcasting mixer. In other examples the broadcasting mixer may comprise recording functionality and the first receiver may receive the first audio file from an output of the mixer.

In some examples, the device may further comprise a local recording device coupled to the second receiver, the local recording device configured to record the broadcasted audio signal from a broadcasting transmission.

In some examples, the device may further comprise a music ID fingerprint storage coupled to the comparing logic. The comparing logic may be configured to generate a fingerprint of the isolated background audio signal and compare it with fingerprints stored in the music ID fingerprint storage to identify the isolated background audio signal.

In another aspect, a computer program product is disclosed. The computer program product may comprise program instructions for causing a computing system to perform a method of identifying a background audio signal in a broadcast audio signal according to some examples disclosed herein.

The computer program product may be embodied on a storage medium (for example, a CD-ROM, a DVD, a USB drive, on a computer memory or on a read-only memory) or carried on a carrier signal (for example, on an electrical or optical carrier signal).

The computer program may be in the form of source code, object code, a code intermediate source and object code such as in partially compiled form, or in any other form suitable for use in the implementation of the processes. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

### BRIEF DESCRIPTION OF THE DRAWINGS

Non-limiting examples of the present disclosure will be described in the following, with reference to the appended drawings, in which:
Figure 1 schematically represents a typical setup of a TV/radio studio, where microphones and music sources may be connected to a common mixer;
Figure 2 schematically illustrates a device for identifying background audio according to an example;
Figure 3 schematically represents a flow chart of a method of identifying a background audio signal in a broadcast audio signal;
Figure 4 schematically represents a flow chart of a validation process according to an example.

### DETAILED DESCRIPTION OF EXAMPLES

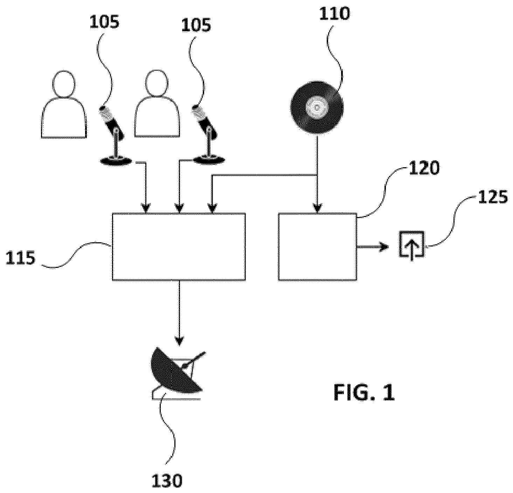

Figure 1 schematically represents a typical setup of a TV/radio studio, where microphones 105 and music sources 110 may be connected to a common mixer 115. Mixer 115, also called a mixing console, may be an electronic device for combining (also called "mixing"), routing, and changing the volume level, timbre (tone color) and/or dynamics of many different audio signals, such as microphones being used by singers, microphones picking up acoustic instruments, such as drums or saxophones, signals from electric or electronic instruments such as the electric bass or synthesizer, or recorded music playing on a music player, e.g. a CD player or an MP3 player. Typically, these mixers have the possibility to replicate any of the input signals to an output signal. In this example, the music source (typically a computer nowdays) is redirected to a recording device 120 that may be a computer with a sound card, a portable recorder, etc. This audio file may contain the isolated music. The recorded audio file 125 with the isolated music may be uploaded to a server using internet (e.g. via FTP). On the other hand, the mixed audio, with e.g. music in the background and speakers in the foreground may be the final broadcasted signal that may be broadcasted using broadcasting transmission equipment 130. The broadcasting transmission equipment 130 may be an antenna or other means of broadcasting.

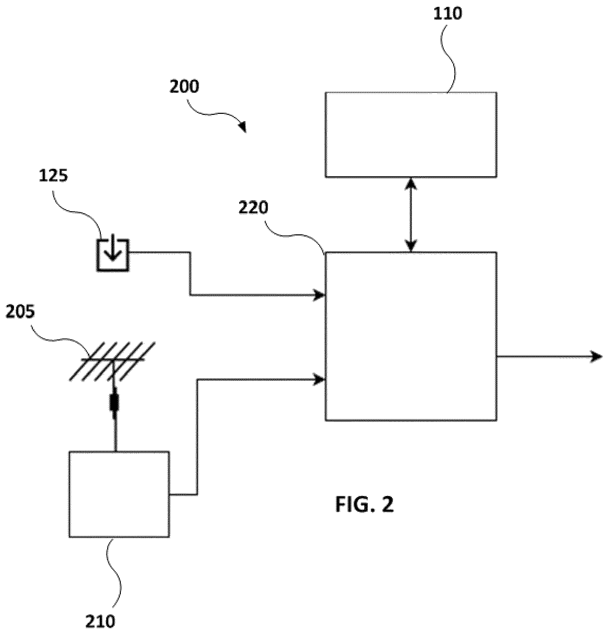

Figure 2 schematically illustrates a device for identifying background audio according to an example. The example device 200 may be considered the "server side" of the proposed system. The broadcasted signal transmitted using broadcasting transmission equipment 130 may be received by a receiver 205, e.g. an antenna, and may be recorded in the server side using a suitable recording device 210 (e.g. a TV capture card). The recording device 210 may provide the mixed audio signal to validation block 220. In parallel, the device may download the isolated audio file from recording device 120. Both audio files may then be processed in validation block 220. Validation block 220 may check if the broadcasted mixed audio signal contains the isolated audio signal coming from the TV/radio studio. Depending on this validation result, the music identification system (e.g. using audio fingerprinting database 225) uses one or another input signal. If the validation process is positive, it runs the identification on the audio coming from the mixer; otherwise, the identification stage uses the broadcasted audio.

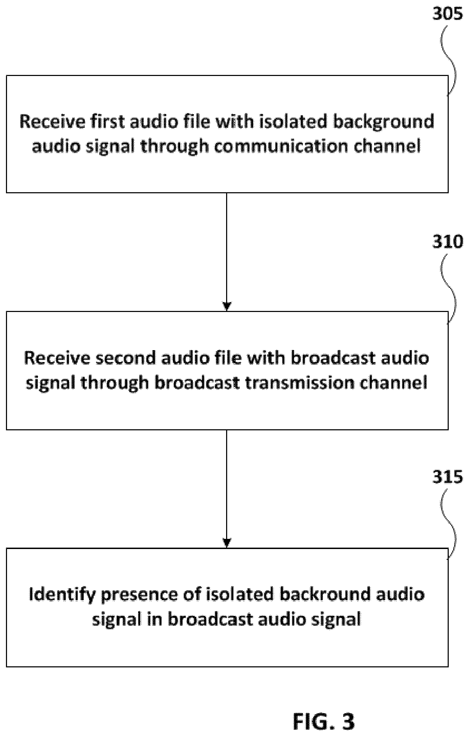

Figure 3 schematically represents a flow chart of a method of identifying a background audio signal in a broadcast audio signal. In block 305 a first audio file with the isolated background audio signal is received from a broadcasting mixer. In block 310 a second audio file with the broadcast audio signal is received through a broadcast transmission channel. In block 315 the background audio signal is identified in the broadcast audio signal.

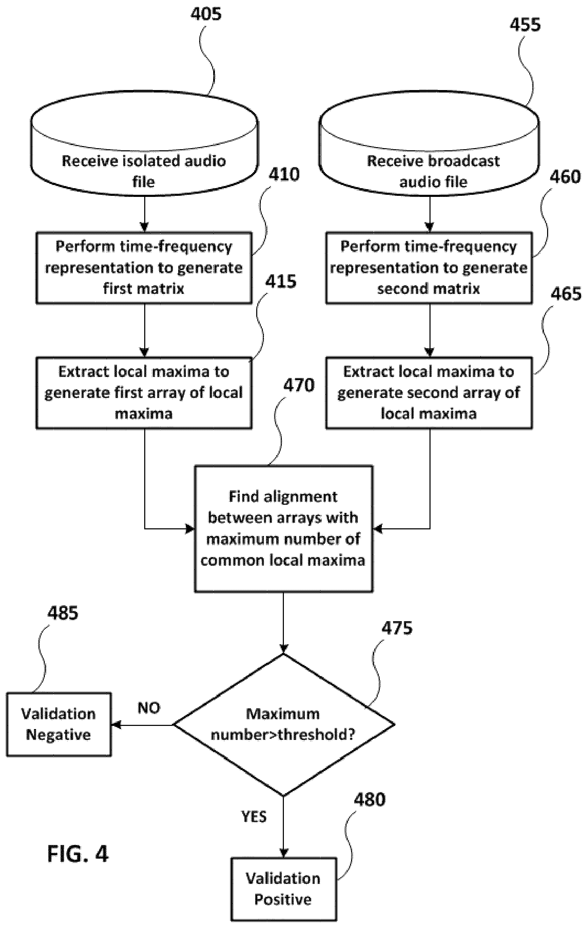

Figure 4 schematically represents a flow chart of a validation process according to an example. In block 405 an audio file is received from a mixer in a radio/TV studio. In block 410 a time-frequency representation (e.g. a spectrogram) of the audio file may be extracted and a first matrix may be generated. In block 415, local maxima extraction may take place and a first array of local maxima may be generated. In parallel, in block 455, an audio file is received from a broadcasting transmission. In block 460, a time-frequency representation (e.g. a spectrogram) of the broadcasted audio file may be extracted and a second matrix may be generated. In block 465, local maxima extraction may take place and a second array of local maxima may be generated. Then, in block 470, the two arrays may be aligned based on the maximum number of common local maxima. That is, the two sets of local maxima may be used to find an optimal alignment between the two audios. In block 475 it is checked if the maximum number of common local maxima exceeds a predetermined threshold number. The number of common local maxima is used to determine if both audios correspond to the same music signal. If the result is positive then in block 480 the validation procedure may be considered positive. That is, the background audio may be considered present in the broadcasted signal. If the maximum number of common local maxima does not exceed the predetermined threshold number then, in block 485, the validation procedure may be considered negative. That is, the background audio may be considered absent from the broadcasted signal.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

Further, although the examples described with reference to the drawings comprise computing apparatus/systems and processes performed in computing apparatus/systems, the invention also extends to computer programs, particularly computer programs on or in a carrier, adapted for putting the system into practice.

## Claims

1. A method of identifying a background audio signal in a broadcast audio signal using multiple sources, comprising:
receiving from a first source a first audio file with the isolated background audio signal;
receiving from a second source a second audio file with the broadcast audio signal;
identifying the background audio signal in the broadcast audio signal.

2. The method according to claim 1, wherein said identifying comprises comparing the first audio file with the second audio file.

3. The method according to claim 1, wherein said comparing comprises validating presence of the first audio file in the second audio file using fingerprinting.

4. The method according to any of claims 1 to 3, wherein identifying further comprises:
generating a first time-frequency representation matrix of the first audio file and a second first time-frequency representation matrix of the second audio file; and
generating a first array of local maxima from the first time-frequency representation matrix and a second array of local maxima from the second time-frequency representation matrix
matching a maximum number of local maxima between the first time-frequency representation matrix of the first audio file and the second time-frequency representation matrix of the second audio file to align the two audio files
identifying the first audio file in the second audio file if the maximum number of local maxima matched is above a predetermined threshold number.

5. The method according to claim 4, wherein the first audio file is a music file.

6. The method according to claim 5, wherein the predetermined threshold number is selected based on an audibility characteristic of the music file.

7. The method according to any of claims 1 to 6, wherein
receiving from a first source comprises recording the isolated background audio signal directly from a broadcasting mixer and downloading the recorded isolated background audio signal at a local server.

8. The method according to any of claims 1 to 7, wherein receiving from a second source the second audio file comprises receiving the broadcasted audio signal from a broadcasting transmission, recording the broadcasted audio signal at a recording device and sending the audio file of the recorded broadcasted audio signal to the local server.

9. A device to identify a background audio signal in a broadcast audio signal using multiple sources, comprising:
a first receiver to receive a first audio file from a first source with the isolated background audio signal;
a second receiver to receive a second audio file with the broadcast audio signal from a second source;
a comparing logic to compare the first with the second audio file to identify the background audio signal in the broadcast audio signal.

10. The device according to claim 9, wherein the first receiver is coupled to a telecommunication network and the first audio file is downloaded to the first receiver from a recording device attached to a broadcasting mixer.

11. The device according to claim 9 or 10, further comprising a local recording device coupled to the second receiver, the local recording device configured to record the broadcasted audio signal from a broadcasting transmission.

12. The device according to any of claims 9 to 11, further comprising a music identification fingerprint storage coupled to the comparing logic, wherein the comparing logic generates a fingerprint of the isolated background audio signal and compares it with fingerprints stored in the music ID fingerprint storage to identify the isolated background audio signal.

13. The device according to any of claims 7 to 10, wherein the isolated background audio signal is music.

14. The device according to any of claims 7 to 10, wherein the broadcast audio signal comprises a speech mixed with background music.

15. A computer program product comprising program instructions for causing a computing system to perform a method according to any of claims 1 to 8.
